# EUROPÄISCHE PATENTSCHRIFT

(11) **EP 4 536 522 B1**
(45) Veröffentlichungstag und Bekanntmachung des Hinweises auf die Patenterteilung: **08.04.2026**
(21) Anmeldenummer: 23731164.2
(22) Anmeldetag: 02.06.2023
(51) Int. Cl.: B60T 13/74

(54) **ELEKTROMECHANISCHER BREMSAKTUATOR, ANTRIEBSBAUGRUPPE FÜR EINEN ELEKTROMECHANISCHEN BREMSAKTUATOR UND VERFAHREN ZUM BETREIBEN EINES ELEKTROMECHANISCHEN BREMSAKTUATORS**
ELECTROMECHANICAL BRAKE ACTUATOR, DRIVE ASSEMBLY FOR AN ELECTROMECHANICAL BRAKE ACTUATOR AND METHOD FOR OPERATING AN ELECTROMECHANICAL BRAKE ACTUATOR
ACTIONNEUR DE FREIN ÉLECTROMÉCANIQUE, ENSEMBLE D'ENTRAÎNEMENT POUR UN ACTIONNEUR DE FREIN ÉLECTROMÉCANIQUE ET PROCÉDÉ DE FONCTIONNEMENT D'UN ACTIONNEUR DE FREIN ÉLECTROMÉCANIQUE

(30) Priorität: 08.06.2022 DE 102022205837
(43) Veröffentlichungstag der Anmeldung: 16.04.2025
(73) Patentinhaber: Robert Bosch GmbH, 70442 Stuttgart (DE)
(72) Erfinder: SCHUSTER, Markus, 74921 Helmstadt (DE); HAAG, Florian, 74248 Ellhofen (DE); LOEFFELMANN, Nikolas, 69234 Dielheim (DE); MARQUART, Martin, 78564 Reichenbach (DE)
(86) Internationale Anmeldenummer: PCT/EP2023/064869
(87) Internationale Veröffentlichungsnummer: WO 2023/237448

(56) Entgegenhaltungen:
- US-A- 3 790 225
- US-A1- 2009 115 247
- US-A1- 2010 026 083
- US-A1- 2010 133 051
- US-A1- 2019 092 298
- US-A1- 2019 100 188
- US-A1- 2020 384 972

## Beschreibung

### Technisches Gebiet

Die vorliegende Erfindung betrifft einen Elektromechanischen Bremsaktuator, eine Antriebsbaugruppe für einen Elektromechanischen Bremsaktuator und ein Verfahren zum Betreiben eines Elektromechanischen Bremsaktuators.

### Stand der Technik

Elektromechanische Bremskraftverstärker werden üblicherweise eingesetzt, um eine manuell an einem Bremspedal erzeugte Betätigungskraft zu verstärken, indem ein Hauptbremszylinder mittels eines Elektromotors betätigt wird. In sogenannten Brake-by-Wire"-Systemen, bei denen durch eine Betätigung des Bremspedals oder auf andere Weise ein Stellsignal erzeugt und ein elektrohydraulischer Aktuator basierend auf dem Stellsignal zur Erzeugung Bremsdrucks betätigt wird, kommen ebenfalls Aktuatoren zum Einsatz, die in ähnlicher Weise aufgebaut sind, wie elektrohydraulische Bremskraftverstärker auch.

Die DE 10 2013 213 888 B3 und US 2009/115247 A1 offenbaren einen elektromechanischen Aktuator für ein Bremssystem mit einem Hauptbremszylinder, einem Elektromotor und einem Getriebe, welches den Elektromotor mit dem Hauptbremszylinder koppelt, um eine Bewegung des Motors in eine Betätigung des Hauptbremszylinders umzusetzen.

Wenn bei einem so aufgebauten Aktuator eine Ansteuerung des Elektromotors in einem Zustand ausfällt, z.B. aufgrund eines Wegfallens der Stromversorgung, in dem der Elektromotor den Hauptbremszylinder oder allgemein die Druckerzeugungsvorrichtung betätigt, um einen hydraulischen Druck aufzubauen, wird das Getriebe durch den aufgebauten hydraulischen Druck mit einer Rückstellkraft beaufschlagt. Das Getriebe wird durch die Rückstellkraft betätigt und bewirkt eine Drehung des Elektromotors, so dass dieser als Generator betrieben wird. Da ein unkontrollierter Druckabbau eine unkontrollierte Betätigung des Getriebes bewirken würde, wird der Elektromotor üblicherweise über eine elektronische Bremsschaltung gebremst, um Bauteilschäden, insbesondere am Getriebe zu vermeiden. Allerdings ist es auch wünschenswert, dass der Druckabbau bei Ausfall des Motors möglichst zügig erfolgt, um schnell effiziente Kompensationsmaßnahmen zur Erzeugung des notwendigen Bremsdrucks einleiten zu können.

### Offenbarung der Erfindung

Vor diesem Hintergrund stellt die vorliegende Erfindung eine Antriebsbaugruppe für einen elektromechanischen Bremsaktuator mit den Merkmalen des Anspruchs 1, einen elektromechanischen Bremsaktuator mit den Merkmalen des Anspruchs 8 und ein Verfahren mit den Merkmalen des Anspruchs 10 bereit.

Nach einem ersten Aspekt der Erfindung umfasst eine Antriebsbaugruppe für einen elektromechanischen Bremsaktuator einen elektrischen Motor, ein kinematisch an den Motor gekoppeltes Getriebe mit einem an eine Druckerzeugungseinrichtung koppelbaren Betätigungsglied, welches durch den Motor zur Betätigung der Druckerzeugungseinrichtung in einer ersten Richtung gegen eine Rückstellkraft linear verstellbar ist, eine elektrisch mit dem Motor verbundene Steuerungseinrichtung zum Ansteuern des Motors, einen Schalter, der durch das Getriebe infolge einer Bewegung des Betätigungsglieds in einer zweiten Richtung aktivierbar ist, und eine elektrische Bremsschaltung, welche mit dem Motor und dem Schalter elektrisch verbunden und durch eine Aktivierung des Schalters und eine elektrische Aktivierungsspannung aktivierbar ist, wobei die Aktivierungsspannung durch den Motor erzeugt wird, wenn dieser bei einem Ausfall der Steuerungseinrichtung durch Aufnahme der auf das Betätigungsglied wirkenden Rückstellkraft als Generator wirkt, und wobei die Bremsschaltung dazu ausgebildet ist, den Motor zu bremsen, um mittels des Motors eine der Rückstellkraft entgegenwirkende Kraft zu erzeugen.

Nach einem zweiten Aspekt der Erfindung ist elektromechanischer Bremsaktuator vorgesehen, welcher eine Antriebsbaugruppe nach dem ersten Aspekt der Erfindung und eine Druckerzeugungseinrichtung aufweist, welche an das Betätigungsglied des Getriebes gekoppelt ist und einen hydraulischen Anschluss zum Bereitstellen von Hydraulikfluid an eine Radbremse aufweist. Die Druckerzeugungseinrichtung ist dazu ausgebildet, einen hydraulischen Druck durch Verdrängung von Hydraulikfluid zu erzeugen.

Nach einem dritten Aspekt der Erfindung ist ein Verfahren zum Betreiben eines Elektromechanischen Bremsaktuators nach dem zweiten Aspekt der Erfindung vorgesehen. Das Verfahren umfasst ein Ansteuern des Motors durch die Steuerungseinrichtung derart, dass der Motor das Betätigungsglied in der ersten oder der zweiten Richtung bewegt, um mittels der Druckerzeugungseinrichtung einen hydraulischen Druck auf- oder abzubauen. Bei einem Ausfall der Steuerungseinrichtung, z.B. aufgrund des Ausfalls einer Versorgungsspannung oder weil in der Steuerungseinrichtung selbst ein Fehler auftritt, wird das Betätigungsglied des Getriebes durch eine infolge des aufgebauten hydraulischen Drucks wirkende Rückstellkraft in der zweiten Richtung bewegt. Das sich in der zweiten Richtung bewegende Betätigungsglied treibt dabei den Motor als Generator an, so dass der Motor eine Aktivierungsspannung erzeugt, und der Schalter wird durch das Getriebe infolge der Bewegung des Betätigungsglieds in der zweiten Richtung aktiviert. In einem weiteren Schritt wird die Bremsschaltung aktiviert, wenn die Bremsschaltung mit der Aktivierungsspannung versorgt und der Schalter aktiviert wird. Weiter erfolgt ein Bremsen des Motors durch die Bremsschaltung, so dass der Motor eine der Rückstellkraft entgegenwirkende Kraft erzeugt, welche die Bewegung des Betätigungsglieds in der zweiten Richtung verlangsamt.

Eine der Erfindung zugrundeliegende Idee besteht darin, eine passive elektronische Bremsschaltung, welche den Elektromotor beim Ausfall der Steuerungseinrichtung abbremst, nicht sofort beim Ausfall der Steuerungseinrichtung zu aktivieren, sondern erst unter der zusätzlichen Bedingung, dass das sich linear zurückbewegende Teile des Getriebes einen Aktivierungsschalter auslösen, der seinerseits die Bremsschaltung aktiviert. Dadurch wird die Möglichkeit geschaffen, dass das Getriebe zunächst durch den von der Druckerzeugungseinrichtung als Rückstellkraft zurückwirkenden hydraulischen Druck über eine bestimmte Strecke frei bzw. ungebremst läuft, bevor es durch den mittels der Bremsschaltung gebremsten Motor gebremst wird. Insbesondere kann dadurch die Druckerzeugungseinrichtung zunächst ungebremst einen Druckabbau vornehmen, wodurch vorteilhaft die Zeit für den Druckabbau verringert wird.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß manchen Ausführungsformen vorgesehen sein, dass der Motor eine Steuerschaltung, z.B. eine Brückenschaltung, aufweist, welche durch die Steuerungseinrichtung schaltbar ist, um den Motor zu betreiben, und dass die Bremsschaltung dazu eingerichtet ist, die Steuerschaltung zu schalten, um den Motor zu bremsen. Beispielsweise kann die Bremsschaltung die Steuerschaltung so schalten, dass die Pole und/oder einzelne Phasen des Motors über die Steuerschaltung kurzgeschlossen werden, so dass zumindest Teile einer Rotorwicklung und/oder einer Statorwicklung des Motors eine Wirbelstrombremse bilden.

Gemäß manchen Ausführungsformen vorgesehen sein, dass die Bremsschaltung dazu ausgebildet ist, einen Ausfall der Steuerungseinrichtung zu detektieren, insbesondere anhand eines von der Steuerungseinrichtung ausgegebenen Ausfallsignals, und nur dann aktiviert wird, wenn ein Ausfall der Steuerungseinrichtung detektiert wird. Beispielsweise kann die Steuerungseinrichtung dazu ausgebildet sein, im Normalbetrieb ein Signal, z.B. in Form einer elektrischen Spannung, an die Bremsschaltung auszugeben. Wenn dieses Signal beim Ausfall der Steuerungsrichtung ausbleibt, detektiert die Bremsschaltung, dass ein Ausfall der Steuerungseinrichtung vorliegt. Zur Detektion kann die Bremsschaltung z.B. einen stromlos geschlossenen Schalter aufweisen. Wenn das Signal der Steuerungseinrichtung ausbleibt, schließt dieser Schalter.

Gemäß manchen Ausführungsformen vorgesehen sein, dass das Betätigungsglied zwischen einer Ausgangsstellung und einer Betätigungsendstellung bewegbar ist, wobei die Rückstellkraft das Betätigungsglied in Richtung der Ausgangsstellung vorspannt, und wobei der Schalter derart angeordnet ist, dass dieser in einer Aktivierungsposition des Betätigungsglieds aktiviert wird, in der sich das Betätigungsglied näher an seiner Ausgangsstellung als an seiner Betätigungsendstellung befindet. Das Betätigungsglied ist zum Druckaufbau durch die Druckerzeugungseinrichtung in der ersten Richtung verschiebbar, also ausgehend von seiner Ausgangsstellung in Richtung der Betätigungsendstellung. Zum Druckabbau ist das Betätigungsglied in der zweiten Richtung, also in Richtung der Ausgangsstellung bewegbar. Der Schalter ist relativ zum Getriebe derart positioniert, dass er beim Druckabbau erst dann ausgelöst wird, wenn das Betätigungsglied sich näher an seiner Ausgangsstellung als an der Betätigungsendstellung befindet. Somit wird ein Freilauf des Getriebes über zumindest 50 Prozent eines maximalen Hubs, den das Betätigungsglied ausführen kann, erzielt. Auf diese Weise wird der Druckabbau weiter beschleunigt.

Allgemein kann vorgesehen sein, dass die Ausgangsstellung und die Betätigungsendstellung einen maximalen Hub des Betätigungsgliedes definieren. Gemäß manchen Ausführungsformen vorgesehen sein, dass die Aktivierungsposition um eine Strecke von der Ausgangsstellung entfernt ist, die in einem Bereich zwischen 5 Prozent und 40 Prozent des maximalen Hubs liegt. Somit wird der Aktivierungsschalter erst aktiviert bzw. betätigt kurz bevor das Betätigungsglied seine Ausgangsstellung erreicht. Auf diese Weise wird der Druckabbau weiter beschleunigt.

Gemäß manchen Ausführungsformen vorgesehen sein, dass der Schalter als Näherungsschalter, insbesondere als Reed-Schalter oder als Hall-Schalter, ausgebildet ist. Beispielsweise kann das Getriebe mit einem Näherungselement, z.B. einem Magnetstück versehen sein, und der Näherungssensor ist derart relativ zum Getriebe positioniert, dass das Näherungselement sich bei der Bewegung des Betätigungsglieds in der zweiten Richtung dem Näherungssensor nähert, so dass dieser ein Signal an die Bremsschaltung ausgibt.

Gemäß manchen Ausführungsformen vorgesehen sein, dass als mechanisch auslösbarer Schalter ausgeführt ist. Hierbei kann der Schalter z.B. durch eine Feder oder ähnliches in einen geöffneten Zustand vorgespannt sein und wird durch ein Element des Getriebes geschlossen, wodurch der Schalter in der Bremsschaltung einen elektrischen Schalter schließt.

Gemäß manchen Ausführungsformen vorgesehen sein, dass das Betätigungsglied durch eine Gewindespindel ausgebildet ist, welche durch ein drehfest mit dieser verbundenes Führungsteil linear geführt und durch eine durch den Motor rotierbare Antriebsmutter linear verstellbar ist, wobei der Schalter durch das Führungsteil auslösbar ist. Dies bietet den Vorteil, dass das Führungsteil ohnehin bereits als Trägerstruktur für Sensorelemente dient, was insbesondere die Integration eines Näherungsschalters in die Antriebsbaugruppe erleichtert.

Gemäß manchen Ausführungsformen vorgesehen sein, dass der Motor als bürstenloser Gleichstrommotor mit einem permanenterregten Rotor, einem Stator, welcher zumindest drei Spulenanordnungen aufweist, und einer mit den Spulenanordnungen verbundenen Kommutierungsschaltung ausgebildet ist, welche durch die Steuerungseinrichtung ansteuerbar ist, wobei die Bremsschaltung dazu ausgebildet ist, zumindest zwei Spulenanordnungen kurzzuschließen, so dass diese als Wirbelstrombremse wirken. Die Kommutierungsschaltung bildet somit eine Steuerschaltung des Motors und kann z.B. als B6-Brückenschaltung realisiert sein.

Gemäß manchen Ausführungsformen vorgesehen sein, dass die Druckerzeugungseinrichtung einen Zylinder und einen in dem Zylinder aufgenommenen Kolben aufweist, welcher durch das Betätigungsglied in einer Vorwärtsrichtung und einer Rückwärtsrichtung zum Verschieben von Hydraulikfluid bewegbar ist, wobei der hydraulische Anschluss durch eine Anschlussbohrung in dem Zylinder ausgebildet ist, und wobei der Zylinder eine Schnüffelbohrung aufweist, welche durch den Kolben freigegeben wird, wenn dieser in der Rückwärtsrichtung bewegt wird, um den Zylinder mit einem Reservoir zu verbinden. Die Druckerzeugungseinrichtung kann somit z.B. ein Hauptbremszylinder oder ein Plunger sein. Durch das Vorsehen des Aktivierungsschalters zum Aktivieren der Bremsschaltung kann sich der Kolben zum Druckabbau über einen relativ großen Bereich bei nur geringen Gegenkräften, die im Wesentlichen den Reibungskräften im Getriebe und im Motor entsprechen, in der Rückwärtsrichtung bewegen. Somit wird erreicht, dass die Schnüffelbohrung schneller freigegeben wird. Dies erleichtert ein schnelles Kompensieren des Ausfalls der Druckerzeugung, da Ersatzsysteme, wie z.B. ein ABS-System, unter Umständen Hydraulikfluid aus dem Reservoir benötigen.

Im Folgenden wird die Erfindung unter Bezugnahme auf die Figuren der Zeichnungen erläutert. Von den Figuren zeigen:
- Fig. 1: eine schematische Schnittansicht eines elektromechanischen Bremsaktuators gemäß einem Ausführungsbeispiel der Erfindung;
- Fig. 2: ein schematisches Funktionsschaltbild einer Antriebsbaugruppe gemäß einem Ausführungsbeispiel der Erfindung, wobei ein Getriebe der Antriebsbaugruppe nicht dargestellt ist;
- Fig. 3: ein Ablaufdiagramm eines Verfahrens gemäß einem Ausführungsbeispiel der Erfindung; und
- Fig. 4: ein Diagramm, in welchem eine Bewegungsgeschwindigkeit eines Kolbens eines Bremsaktuators über den Bewegungsweg aufgetragen ist.

In den Figuren bezeichnen dieselben Bezugszeichen gleiche oder funktionsgleiche Komponenten, soweit nichts Gegenteiliges angegeben ist.

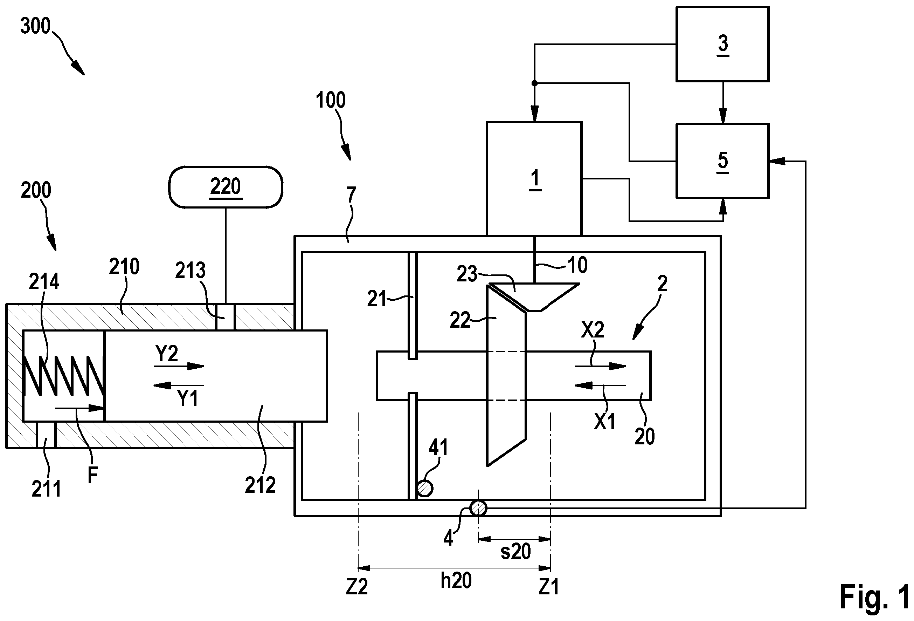

Fig. 1 zeigt beispielhaft und in rein schematischer Weise einen elektromechanischen Bremsaktuator 300. Wie in Fig. 1 gezeigt, umfasst der Bremsaktuator 300 eine Antriebsbaugruppe 100 mit einem elektrischen Motor 1, einem Getriebe 2, einer Steuerungseinrichtung 3, einem Aktivierungsschalter 4 und einer elektrischen Bremsschaltung 5 und eine Druckerzeugungseinrichtung 200.

Die Druckerzeugungseinrichtung 200 ist allgemein zum Erzeugen eines hydraulischen Drucks ausgebildet und durch die Antriebsbaugruppe 100 betätigbar. Wie in Fig. 1 beispielhaft gezeigt, kann die Druckerzeugungseinrichtung 200 z.B. einen Zylinder 210, einen Kolben 212 und optional ein Reservoir 220 aufweisen. Der Zylinder 210 weist in einen Anschluss 211, z.B. in Form einer Bohrung, auf, der insbesondere in einem ersten Endbereich des Zylinders 210 ausgebildet sein kann. Über diesen Anschluss 211 ist die Druckerzeugungseinrichtung 200 mit einer oder mehreren Radbremsen (nicht gezeigt) verbindbar. Ferner weist der Zylinder 200, insbesondere in einem zweiten Endbereich, eine Schnüffelbohrung 213 auf, durch welche der Zylinder 210 über eine Leitung mit dem Reservoir 220 verbunden ist. Der Kolben 212 ist in dem Zylinder 210 axial in einer Vorwärtsrichtung Y1 und in einer Rückwärtsrichtung Y2 bewegbar und kann, wie in Fig. 1 beispielhaft gezeigt, in der Rückwärtsrichtung Y2 durch eine Rückstellfeder 214 vorgespannt sein.

Zum Aufbauen eines hydraulischen Drucks ist der Kolben 212 durch die Antriebsbaugruppe 100 in der Vorwärtsrichtung Y1 bewegbar. Dadurch wird das Innenvolumen des Zylinders 210 verkleinert und Hydraulikfluid durch den Anschluss 211 ausgestoßen. Wie in Fig. 1 schematisch gezeigt verschließt der Kolben 212 die Schnüffelbohrung 213, sobald er weit genug in der Vorwärtsrichtung Y1 bewegt wurde. Zum Druckabbau ist der Kolben 212 durch die Antriebsbaugruppe 100 in der Rückwärtsrichtung Y2 bewegbar. Sobald der Kolben 212 in Bezug auf die Rückwärtsrichtung Y2 hinter der Schnüffelbohrung 213 positioniert ist, gibt er diese frei, so dass Hydraulikfluid aus dem Reservoir 220 in den Zylinder 210 gelangt.

Wie bereits angesprochen ist die Antriebsbaugruppe 100 dazu ausgebildet, die Druckerzeugungseinrichtung 200 anzutreiben bzw. zu betätigen.

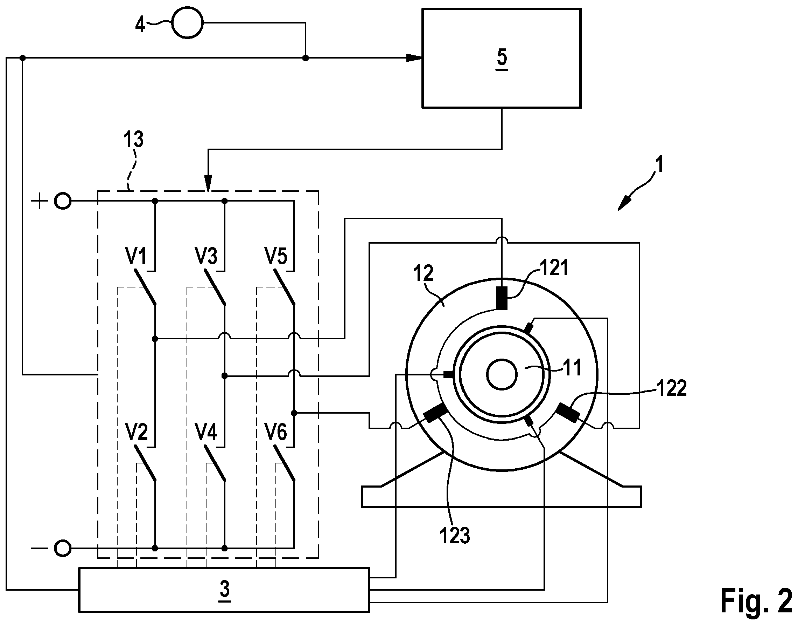

Der elektrische Motor 1 weist allgemein einen Rotor 11 und einen Stator 12 auf und ist kinematisch an das Getriebe 2 gekoppelt, insbesondere der Rotor 11. In Fig. 2 ist rein beispielhaft ein als bürstenloser Gleichstrommotor realisierter Motor 1 gezeigt, welcher eine permanenterregten Rotor 11 und einen Stator 12 mit drei Spulenanordnungen 121, 122, 123 aufweist. Jede Spulenanordnung 121, 122, 123 bildet einen Phasenanschluss. Der in Fig. 2 beispielhaft gezeigte Motor 1 weist ferner eine Steuerungsschaltung 13 auf, welche insbesondere als Kommutierungsschaltung dient und beispielsweise als Brückenschaltung ausgebildet sein kann. In Fig. 2 ist beispielhaft gezeigt, dass die Steuerungsschaltung 13 als B6-Brückenschaltung mit elektronischen Schaltelementen, z.B. Transistoren, V1-V6 ausgebildet ist.

Die Steuerungseinrichtung 3 ist elektrisch mit der Steuerschaltung 13 oder allgemein mit dem Motor 1 verbunden und dazu ausgebildet, den Motor 1 anzusteuern, insbesondere um den Betrieb des Motors 1 zu steuern. Beispielsweise kann die Steuerungseinrichtung 3 eine Recheneinheit (nicht gezeigt), insbesondere in Form eines ASIC (kurz für den englischen Ausdruck "application-specific integrated circuit"), und eine Speichereinheit, z.B. in Form eines SD-Speichers, aufweisen. Die Steuerungseinrichtung 3 ist insbesondere zur Ausgabe von Steuersignalen ausgebildet. Beispielsweise kann die Steuerungseinrichtung 3 Steuersignale an die Steuerschaltung 13 ausgeben, um die Schaltelemente V1-V6 zu schalten, so dass die Spulenanordnungen 121, 122, 123 des Stators 12 ein rotierendes Magnetfeld erzeugen, das den Rotor 11 antreibt.

Wie in den Fign. 1 und 2 weiterhin gezeigt ist, ist die Steuerungsvorrichtung optional auch mit der Bremsschaltung 5 signalleitend bzw. elektrisch verbunden, wie dies nachfolgend noch erläutert wird.

Wieder unter Bezugnahme auf Fig. 1 ist erkennbar, dass das Getriebe 2 den Motor 1 kinematisch an den Kolben 212 oder allgemein an die Druckerzeugungseinrichtung 200 koppelt. Das Getriebe 2 weist insbesondere ein Betätigungsglied 20 auf, das durch den Motor 2 axial bzw. linear in einer ersten und in einer zweiten Richtung X1, X2 bewegbar ist. Das Betätigungsglied 20 kann z.B. eine Gewindespindel sein. Ferner kann das Getriebe 2 ein Führungsteil 21 aufweisen, das drehfest mit der Gewindespindel verbunden und in der ersten und der zweiten Richtung X1, X2 verschiebbar geführt ist, z.B. an einem Gehäuse 7, in dem das Getriebe 2 aufgenommen ist. Die Gewindespindel wird somit durch das Führungsteil 21 linear geführt. Zur axialen Verschiebung der Gewindespindel kann eine Antriebsmutter 22 vorgesehen sein, welche in Innengewinde aufweist, das in ein Außengewinde der Gewindespindel eingreift. Die Antriebsmutter 22 ist durch den Motor 1 rotierbar, z.B. über ein an die Antriebswelle 10 des Motors 1 gekoppeltes Stirnrad 23, das mit einer Außenverzahnung der Antriebsmutter 22 in Eingriff steht, wie dies in Fig. 1 rein beispielhaft gezeigt ist. Selbstverständlich sind auch andere Übertragungswege für das Drehmoment zwischen Motor 1 und Betätigungsteil 20 denkbar.

Das Betätigungsglied 20 ist, wie in Fig. 1 schematisch gezeigt, an die Druckerzeugungseinrichtung 200 gekoppelt, insbesondere an den Kolben 212. Eine Verschiebung des Betätigungsglieds 20 in der ersten Richtung X1 betätigt die Druckerzeugungsvorrichtung 200 zum Druckaufbau, z.B. indem das Betätigungsglied 20 den Kolben 212 in der Vorwärtsrichtung Y1 verschiebt. Eine Verschiebung des Betätigungsglieds 20 in der zweiten Richtung X2 betätigt die Druckerzeugungsvorrichtung 200 zum Druckabbau, z.B. indem das Betätigungsglied 20 den Kolben 212 in der Rückwärtsrichtung Y2 verschiebt.

Allgemein ist das Betätigungsglied zwischen einer Ausgangsstellung und einer Betätigungsendstellung verschiebbar. Zum Aufbauen von Druck wird das Betätigungsglied 20 von der Ausgangsstellung in der ersten Richtung X1 in Richtung der Betätigungsendstellung verschoben. Ein maximaler

Wie in Fig. 1 erkennbar, wirkt auf den Kolben 212 eine Rückstellkraft F in der Rückwärtsrichtung Y, welche durch die Feder 214, insbesondere aber durch das Hydraulikfluid aufgebracht wird, wenn die Druckerzeugungseinrichtung 200 zum Druckaufbau betätigt wird. Wenn der Motor 1 kein Drehmoment mehr erzeugt, z.B. im Falle eines Ausfalls der Steuerungseinrichtung 3, bewirkt die Rückstellkraft F eine Bewegung des Betätigungsglieds 20 in der zweiten Richtung X2. Eine Wegstrecke, die das Betätigungsglied 20 zwischen der Ausgangsstellung und der Betätigungsendstellung zurücklegt, entspricht einem maximalen Hub h20 des Betätigungsgliedes 20. In Fig. 1 sind beispielhaft eine Position Z2, welche der Position des Führungsteils 21 in der Betätigungsendstellung des Betätigungsglieds 20 entspricht, und eine Position Z1 eingezeichnet, welche der Position des Führungsteils 21 in der Ausgangsstellung des Betätigungsglieds 20 entspricht.

Der Aktivierungsschalter 4 kann z.B. als mechanisch betätigbarer Schalter oder, wie in Fig. 1 schematisch dargestellt, als Näherungsschalter, z.B. als Reed- oder Hall-Schalter, ausgebildet sein. Wie in Fig. 1 schematisch gezeigt, kann der Schalter 4 z.B. an dem Gehäuse 7 angebracht sein. Ein Näherungsstück 41, z.B. in Form eines Magneten, kann beispielsweise an dem Führungsteil 21 angeordnet sein, so dass der Schalter 4 aktiviert wird, wenn das Näherungsstück 41 relativ zum Schalter 4 eine vorbestimmte Distanz unterschreitet, insbesondere wenn sich das Führungsteil 21 mit dem Betätigungsglied 20 in der zweiten Richtung X2 bewegt. Selbstverständlich kann auch der Schalter 4 an dem Führungsteil 41 und das Näherungsteil 41 am Gehäuse 7 vorgesehen sein. Alternativ kann das Näherungsstück 41 oder der Schalter 4 auch an dem Betätigungsglied 20 angebracht sein. Vorzugsweise ist der Schalter 4 somit eine Bewegung des Führungsteils 21 in der zweiten Richtung X1 auslösbar. Dies gilt auch im Fall eines mechanischen Schalters. Allgemein ist Schalter 4 durch das Getriebe 2 infolge einer Bewegung des Betätigungsglieds 20 in einer zweiten Richtung X2 aktivierbar. Wenn der Schalter 4 durch das Getriebe 2 aktiviert oder allgemein geschaltet wird, wird durch den Schalter 4 ein Schaltvorgang in der Bremsschaltung 5 ausgelöst, z.B. indem der Schalter 4 ein Signal an die Bremsschaltung 5 ausgibt.

Der Schalter 4 kann in dem Beispiel in Fig. 1 z.B. in der ersten Richtung X1 um eine Strecke s20 von der Position Z1 entfernt angeordnet sein, wobei die Strecke s20 optional in einem Bereich zwischen 5 Prozent und 40 Prozent des maximalen Hubs h20 liegt. Somit legt das Führungsteil bei einer Bewegung ausgehend von der Betätigungsendstellung in der zweiten Richtung X2 zwischen 60 Prozent und 95 Prozent des maximalen Hubs h20 zurück, bis es den Schalter 4 aktiviert. Die Position des Betätigungsglieds 20, in der der Schalter 4 aktiviert wird, kann als Aktivierungsposition bezeichnet werden. Die Aktivierungsposition kann somit um eine Strecke s20 von der Ausgangsstellung entfernt sein, die in einem Bereich zwischen 5 Prozent und 40 Prozent des maximalen Hubs h20 liegt. Allgemein kann der Schalter 4 derart angeordnet sein, dass sich das Betätigungsglied 20 in der Aktivierungsposition näher an seiner Ausgangsstellung als an seiner Betätigungsendstellung befindet.

Die Bremsschaltung 5 ist in den Fign. 1 und 2 lediglich symbolisch als Block dargestellt und ist mit dem Motor 1 und dem Schalter 4 elektrisch verbunden. Optional kann die Bremsschaltung 5 zusätzlich mit der Steuerungsvorrichtung 3 elektrisch verbunden sein. Die Bremsschaltung 5 ist als passive elektrische Schaltung ausgeführt und dazu ausgebildet, im Falle eines Ausfalls der Steuerungsvorrichtung 3 den Motor 1 zu bremsen. Beispielsweise kann die Bremsschaltung 5 dazu ausgebildet sein, zumindest zwei der in Fig. 2 gezeigten drei Spulenanordnungen 121, 122, 123 kurzzuschließen, so dass diese eine Wirbelstrombremse bilden, welche den sich drehenden Rotor 11 bremst. Hierzu kann die Bremsschaltung 5 z.B. zumindest zwei der drei Schalter V2, V4, V6 schließen.

Die Bremsschaltung 5 ist so ausgebildet, dass sie aktiviert wird, wenn sie eine Aktivierungsspannung erhält und zusätzlich der Schalter 4 aktiviert wird. Optional kann die Bremsschaltung 5 zusätzlich dazu ausgebildet ist, einen Ausfall der Steuerungseinrichtung 3 zu detektieren, insbesondere anhand eines von der Steuerungseinrichtung 3 ausgegebenen Ausfallsignals, und nur dann aktiviert werden, wenn ein Ausfall der Steuerungseinrichtung 3 detektiert wird. Die Aktivierungsspannung wird durch den Motor 1 erzeugt, da dessen Rotor 11, wenn das Betätigungsglied 20 bei einem Ausfall der Steuerungseinrichtung 3 in der zweiten Richtung X2 durch die Rückstellkraft F bewegt wird, gedreht wird, und der Motor 1 somit einen Generator bildet.

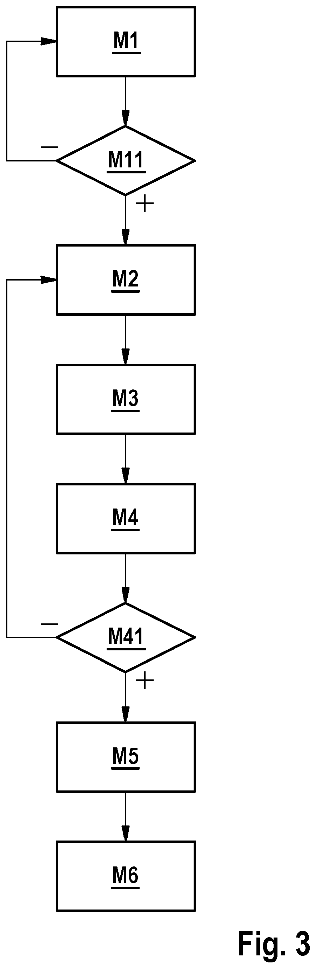

Der oben beschriebene elektromechanische Aktuator 300 kann gemäß einem Verfahren M betrieben werden, dessen Ablauf in Fig. 3 schematisch dargestellt ist.

In Schritt M1 erfolgt ein Ansteuern des Motors 1 durch die Steuerungseinrichtung 3 derart, dass der Motor 1 das Betätigungsglied 20 in der ersten oder der zweiten Richtung X1, X2 bewegt, um mittels der Druckerzeugungseinrichtung 200 einen hydraulischen Druck auf- oder abzubauen. Beispielsweise gibt die Steuerungseinrichtung 3 Steuersignale an die Steuerschaltung 13 des Motors 1 aus, um die Schaltelemente 13 zu schalten.

In Schritt M11 detektiert die Bremsschaltung 5, ob ein Ausfall der Steuerungsvorrichtung 3 vorliegt. Wird ein Ausfall nicht detektiert, so wie dies in Fig. 3 durch das Symbol "-" illustriert ist, wird weiter Schritt M1 ausgeführt. Wird ein Ausfall der Steuerungsvorrichtung 3 detektiert, wie dies in Fig. 3 durch das Symbol "+" angezeigt ist, geht das Verfahren zur Ausführung der Schritte M2 bis M5 über.

In Schritt M2 wird das Betätigungsglied 20 durch die Rückstellkraft F, die aufgrund des hydraulischen Drucks über den Kolben 212 bzw. allgemein die Druckerzeugungseinrichtung 200 auf das Betätigungsglied 20 wirkt, in der zweiten Richtung X2 bewegt. Durch die Bewegung des Betätigungsglieds 20 in der zweiten Richtung X2 wird in Schritt M3 der Motor 1 als Generator durch das Getriebe 2 angetrieben und erzeugt dadurch eine Aktivierungsspannung, die an die Bremsschaltung 5 angelegt wird.

In Schritt M4 wird der Schalter 4 infolge der Bewegung des Betätigungsglieds 20 in der zweiten Richtung X2 durch das Getriebe 2 aktiviert. Insbesondere, wenn das Betätigungsglied 20 die Aktivierungsposition erreicht, also in Fig. 1 z.B. dann, wenn das Führungsteil 21 bei der Bewegung in der zweiten Richtung X2 den Schalter 4 erreicht, wird der Schalter 4 betätigt.

In Schritt M41 detektiert die Bremssteuerung 5, ob die Aktivierungsspannung erzeugt wird und ob der Schalter 4 aktiviert wird. Da die Bremssteuerung 5 als passive elektrische Schaltung ausgeführt ist, kann der Detektionsschritt M41 z.B. ein Betätigen eines ersten Schaltelements der Bremssteuerung durch die Aktivierungsspannung und ein Betätigen eines zweiten Schaltelements durch ein vom Schalter 4 erzeugtes Schaltsignal umfassen. Wenn in Schritt M41 eine der beiden Voraussetzungen nicht vorliegt (Symbol "-" in Fig. 3), kann das Verfahren M zurück zu Schritt M2 gehen, wie in Fig. 3 beispielhaft durch gezeigt. Wenn die Aktivierungsspannung und die Aktivierung des Schalters detektiert wird, wie in Fig. 3 durch das Symbol "+" dargestellt, wird in Schritt M5 die Bremsschaltung 5 aktiviert wird.

In Schritt M6, der auch als Teilschritt des Schritts M5 angesehen werden kann, bremst die Bremsschaltung 6 den Motor 1 bremst, z.B. in dem sie, wie ein Fig. 2 beispielhaft gezeigt, zumindest zwei der drei Spulenanordnungen 121, 122, 123 kurzschließt. Der Motor 1 wird dadurch gebremst und erzeugt eine der Rückstellkraft entgegenwirkende Kraft, welche die Bewegung des Betätigungsglieds 20 in der zweiten Richtung X2 verlangsamt.

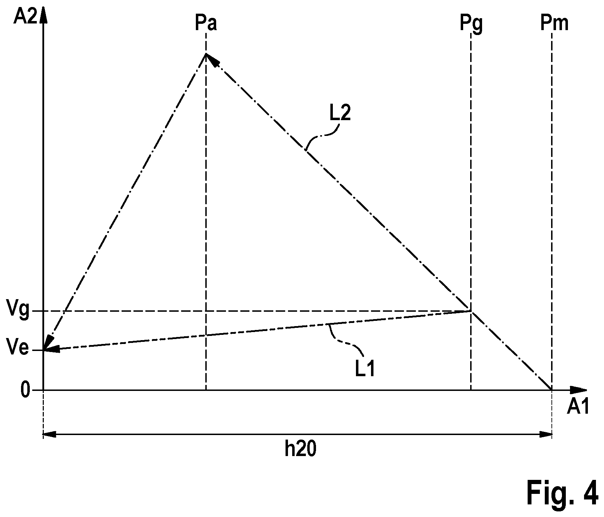

Die Wirkung der Erfindung wird insbesondere in Fig. 4 deutlich, welche ein Diagramm zeigt, bei dem auf einer Abszisse A1 ein Weg, den der Kolben 212 bzw. das Betätigungsglied 20 zurücklegt, und auf der Ordinate eine Geschwindigkeit, mit der sich der Kolben 212 bzw. das Betätigungsglied 20 bewegt, aufgetragen ist.

In Fig. 4 befindet sich das Betätigungsglied 20 in der Position Pm in seiner Betätigungsendposition, und in dieser Position Pm fällt die Steuerungseinrichtung 3 aus. In der Folge beschleunigt der Kolben 212 bzw. das Betätigungsglied 20 infolge der hydraulischen Rückstellkraft F im Wesentlichen linear. Ab einer Geschwindigkeit Vg des Betätigungsgliedes 20 (an Position Pg in Fig. 4), beginnt der Motor 1 als Generator zu wirken und eine Aktivierungsspannung zu erzeugen, mit der die Bremsschaltung 5 versorgt wird. Wenn die Bremsschaltung 5 bereits zu diesem Zeitpunkt aktiviert würde, würde sich ein weiterer Geschwindigkeitsverlauf ergeben, wie dies in Fig. 4 durch die Doppelstrichpunktlinie L1 dargestellt ist. Wie am Verlauf der Linie L1 erkennbar ist, wird der Motor 1 in diesem Fall sofort durch die Bremsschaltung 5 gebremst und die Geschwindigkeit des Betätigungsgliedes 20 bzw. des Kolbens 212 nimmt langsam, im Wesentlichen linear bis auf eine Endgeschwindigkeit Ve ab, bis das Betätigungsglied 20 seine Ausgangsstellung erreicht.

Bei dem erfindungsgemäßen Verfahren bzw. aufgrund des Aufbaus des erfindungsgemäßen Aktuators 300 mit dem Schalter 4, ergibt sich der in Fig. 4 durch die Strichpunktlinie L2 dargestellte Geschwindigkeitsverlauf. Demnach beginnt der Motor 1 ebenfalls ab der Position Pg des Betätigungsglieds 20 als Generator zu wirken und eine Aktivierungsspannung zu erzeugen, mit der die Bremsschaltung 5 versorgt wird. Jedoch wird die Bremsschaltung 5 noch nicht aktiviert und die Geschwindigkeit des Kolbens 212 bzw. des Betätigungsgliedes 20 nimmt weiter zu, z.B. im Wesentlichen linear, bis das Betätigungsglied 20 die Aktivierungsposition Pa erreicht. An der Aktivierungsposition Pa wird der Schalter 4 aktiviert und aktiviert dadurch die Bremsschaltung 5, welche daraufhin den Motor 1 bremst. Daher nimmt ab der Aktivierungsposition Pa die Geschwindigkeit bis zum Erreichen der Ausgangsstellung wieder bis auf die Endgeschwindigkeit Ve ab.

Die Zeit, die das Betätigungsglied 20 und damit der Kolben 212 benötigt, um den maximalen Hub h20 auszuführen, ist bei dem Beispiel in Fig. 4 umgekehrt proportional zur Fläche unter dem jeweiligen Verlauf L1, L2. Es ist somit erkennbar, dass der Geschwindigkeitsverlauf L2, der sich aufgrund der Erfindung ergibt, zu einer deutlichen Verkürzung der Zeit führt, die für die Ausführung des maximalen Hubs h20 zum Druckabbau notwendig ist.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

## Patentansprüche

1. Antriebsbaugruppe (100) für einen elektromechanischen Bremsaktuator (300), aufweisend:
einen elektrischen Motor (1);
ein kinematisch an den Motor (1) gekoppeltes Getriebe (2) mit einem an eine Druckerzeugungseinrichtung (200) koppelbaren Betätigungsglied (20), welches durch den Motor (1) zur Betätigung der Druckerzeugungseinrichtung (200) in einer ersten Richtung (X1) gegen eine Rückstellkraft linear verstellbar ist;
eine elektrisch mit dem Motor (1) verbundene Steuerungseinrichtung (3) zum Ansteuern des Motors (1);
**gekennzeichnet durch**
einen Schalter (4), der durch das Getriebe (2) infolge einer Bewegung des Betätigungsglieds (20) in einer zweiten Richtung (X2) aktivierbar ist; und
eine elektrische Bremsschaltung (5), welche mit dem Motor (1) und dem Schalter (4) elektrisch verbunden und durch eine Aktivierung des Schalters (4) und eine elektrische Aktivierungsspannung aktivierbar ist,
wobei die Aktivierungsspannung durch den Motor (1) erzeugt wird, wenn dieser bei einem Ausfall der Steuerungseinrichtung (3) durch Aufnahme der auf das Betätigungsglied (20) wirkenden Rückstellkraft als Generator wirkt, und wobei die Bremsschaltung (5) dazu ausgebildet ist, den Motor (1) zu bremsen, um mittels des Motors (1) eine der Rückstellkraft entgegenwirkende Kraft zu erzeugen.

2. Antriebsbaugruppe (100) nach Anspruch 1, wobei die Bremsschaltung (5) ferner dazu ausgebildet ist, einen Ausfall der Steuerungseinrichtung (3) zu detektieren, insbesondere anhand eines von der Steuerungseinrichtung (3) ausgegebenen Ausfallsignals, und nur dann aktiviert wird, wenn ein Ausfall der Steuerungseinrichtung (3) detektiert wird.

3. Antriebsbaugruppe (100) nach Anspruch 1 oder 2, wobei das Betätigungsglied (20) zwischen einer Ausgangsstellung und einer Betätigungsendstellung bewegbar ist, wobei die Rückstellkraft das Betätigungsglied (20) in Richtung der Ausgangsstellung vorspannt, und wobei der Schalter (4) derart angeordnet ist, dass dieser in einer Aktivierungsposition des Betätigungsglieds (20) aktiviert wird, in der sich das Betätigungsglied (20) näher an seiner Ausgangsstellung als an seiner Betätigungsendstellung befindet.

4. Antriebsbaugruppe (100) nach Anspruch 3, wobei die Ausgangsstellung und die Betätigungsendstellung einen maximalen Hub (h20) des Betätigungsgliedes (20) definieren, und wobei die Aktivierungsposition um eine Strecke (s20) von der Ausgangsstellung entfernt ist, die in einem Bereich zwischen 5 Prozent und 40 Prozent des maximalen Hubs (h20) liegt.

5. Antriebsbaugruppe (100) nach einem der voranstehenden Ansprüche, wobei der Schalter (4) als Näherungsschalter, insbesondere als Reed-Schalter oder als Hall-Schalter, oder als mechanisch auslösbarer Schalter ausgeführt ist.

6. Antriebsbaugruppe (100) nach einem der voranstehenden Ansprüche, wobei das Betätigungsglied (20) durch eine Gewindespindel ausgebildet ist, welche durch ein drehfest mit dieser verbundenes Führungsteil (21) linear geführt und durch eine durch den Motor (1) rotierbare Antriebsmutter (22) linear verstellbar ist, wobei der Schalter (4) durch das Führungsteil (21) auslösbar ist.

7. Antriebsbaugruppe (100) nach einem der voranstehenden Ansprüche, wobei der Motor (1) als bürstenloser Gleichstrommotor mit einem permanenterregten Rotor (11), einem Stator (12), welcher zumindest drei Spulenanordnungen (121, 122, 123) aufweist, und einer mit den Spulenanordnungen (121, 122, 123) verbundenen Kommutierungsschaltung (13) ausgebildet ist, welche durch die Steuerungseinrichtung (3) ansteuerbar ist, und wobei die Bremsschaltung (5) dazu ausgebildet ist, zumindest zwei Spulenanordnungen (121, 122, 123) kurzzuschließen, so dass diese als Wirbelstrombremse wirken.

8. Elektromechanischer Bremsaktuator (300), aufweisend:
eine Antriebsbaugruppe (100) nach einem der voranstehenden Ansprüche; und
eine Druckerzeugungseinrichtung (200), welche an das Betätigungsglied (20) des Getriebes (2) gekoppelt ist und einen hydraulischen Anschluss (202) zum Bereitstellen von Hydraulikfluid an eine Radbremse aufweist.

9. Bremsaktuator (300) nach Anspruch 8, wobei die Druckerzeugungseinrichtung (200) einen Zylinder (210) und einen in dem Zylinder (210) aufgenommenen Kolben (212) aufweist, welcher durch das Betätigungsglied (20) in einer Vorwärtsrichtung (Y1) und einer Rückwärtsrichtung (Y2) zum Verschieben von Hydraulikfluid bewegbar ist, wobei der hydraulische Anschluss (202) durch eine Anschlussbohrung (211) in dem Zylinder (210) ausgebildet ist, und wobei der Zylinder (210) eine Schnüffelbohrung (213) aufweist, welche durch den Kolben (212) freigegeben wird, wenn dieser in der Rückwärtsrichtung (Y2) bewegt wird, um den Zylinder (210) mit einem Reservoir (220) zu verbinden.

10. Verfahren (M) zum Betreiben eines Elektromechanischen Bremsaktuators (300) nach Anspruch 8 oder 9, umfassend:
Ansteuern (M1) des Motors (1) durch die Steuerungseinrichtung (3) derart, dass der Motor (1) das Betätigungsglied (20) in der ersten oder der zweiten Richtung (X1, X2) bewegt, um mittels der Druckerzeugungseinrichtung (200) einen hydraulischen Druck auf- oder abzubauen;
wobei bei einem Ausfall der Steuerungseinrichtung (3):
eine infolge des aufgebauten hydraulischen Drucks wirkende Rückstellkraft das Betätigungsglied (20) in der zweiten Richtung (X2) bewegt (M2),
das sich in der zweiten Richtung (X2) bewegende Betätigungsglied (20) den Motor (1) als Generator antreibt, so dass der Motor (5) eine Aktivierungsspannung erzeugt (M3);
der Schalter (4) durch das Getriebe (2) infolge der Bewegung des Betätigungsglieds (20) in der zweiten Richtung (X2) aktiviert wird (M4);
die Bremsschaltung (5) aktiviert wird (M5), wenn die Bremsschaltung (5) mit der Aktivierungsspannung versorgt und der Schalter (4) aktiviert wird; und
die Bremsschaltung (6) den Motor (1) bremst, so dass der Motor (1) eine der Rückstellkraft entgegenwirkende Kraft erzeugt, welche die Bewegung des Betätigungsglieds (20) in der zweiten Richtung (X2) verlangsamt.

## Claims

1. Drive assembly (100) for an electromechanical brake actuator (300), comprising:
an electric motor (1);
a gear mechanism (2) which is kinematically coupled to the motor (1) and has an actuating element (20) which can be coupled to a pressure-generating device (200) and can be linearly adjusted by the motor (1) in a first direction (X1) against a restoring force in order to actuate the pressure-generating device (200);
a control device (3), which is electrically connected to the motor (1), for controlling the motor (1);
**characterized by** a switch (4) which can be activated by the gear mechanism (2) as a result of a movement of the actuating element (20) in a second direction (X2); and
an electrical brake circuit (5) which is electrically connected to the motor (1) and the switch (4) and can be activated by activation of the switch (4) and an electrical activation voltage, wherein the activation voltage is generated by the motor (1) if, in the event of failure of the control device (3), the motor acts as a generator by absorbing the restoring force acting on the actuating element (20), and wherein the brake circuit (5) is designed to brake the motor (1) in order to generate a force, which counteracts the restoring force, by means of the motor (1).

2. Drive assembly (100) according to Claim 1, wherein the brake circuit (5) is further designed to detect failure of the control device (3), in particular on the basis of a failure signal which is output by the control device (3), and is activated only when failure of the control device (3) is detected.

3. Drive assembly (100) according to Claim 1 or 2, wherein the actuating element (20) can be moved between an initial position and an actuating end position, wherein the restoring force preloads the actuating element (20) in the direction of the initial position, and wherein the switch (4) is arranged in such a way that it is activated in an activation position of the actuating element (20) in which the actuating element (20) is located closer to its initial position than to its actuating end position.

4. Drive assembly (100) according to Claim 3, wherein the initial position and the actuating end position define a maximum stroke (h20) of the actuating element (20), and wherein the activation position is remote from the initial position by a distance (s20) which lies in a range between 5 per cent and 40 per cent of the maximum stroke (h20).

5. Drive assembly (100) according to any of the preceding claims, wherein the switch (4) is embodied as a proximity switch, in particular as a reed switch or as a Hall switch, or as a mechanically trippable switch.

6. Drive assembly (100) according to any of the preceding claims, wherein the actuating element (20) is formed by a threaded spindle which is linearly guided by a guide part (21), which is connected to the threaded spindle for conjoint rotation, and can be linearly adjusted by a drive nut (22) which can be rotated by the motor (1), wherein the switch (4) can be tripped by the guide part (21).

7. Drive assembly (100) according to any of the preceding claims, wherein the motor (1) is designed as a brushless DC motor having a permanently excited rotor (11), a stator (12) which has at least three coil arrangements (121, 122, 123), and a commutation circuit (13) which is connected to the coil arrangements (121, 122, 123) and can be controlled by the control device (3), and wherein the brake circuit (5) is designed to short-circuit at least two coil arrangements (121, 122, 123), so that they act as an eddy current brake.

8. Electromechanical brake actuator (300), comprising:
a drive assembly (100) according to any of the preceding claims; and
a pressure-generating device (200) which is coupled to the actuating element (20) of the gear mechanism (2) and has a hydraulic connection (202) for providing hydraulic fluid to a wheel brake.

9. Brake actuator (300) according to Claim 8, wherein the pressure-generating device (200) has a cylinder (210) and a piston (212) which is accommodated in the cylinder (210) and can be moved by the actuating element (20) in a forwards direction (Y1) and a backwards direction (Y2) for displacing hydraulic fluid, wherein the hydraulic connection (202) is formed by a connection hole (211) in the cylinder (210), and wherein the cylinder (210) has a snifter hole (213) which is released by the piston (212) when the piston is moved in the backwards direction (Y2) in order to connect the cylinder (210) to a reservoir (220).

10. Method (M) for operating an electromechanical brake actuator (300) according to Claim 8 or 9, comprising:
controlling (M1) the motor (1) by the control device (3) in such a way that the motor (1) moves the actuating element (20) in the first or the second direction (X1, X2) in order to increase or decrease a hydraulic pressure by means of the pressure-generating device (200);
wherein in the event of failure of the control device (3):
a restoring force which acts as a result of the built-up hydraulic pressure moves (M2) the actuating element (20) in the second direction (X2),
the actuating element (20) which moves in the second direction (X2) drives the motor (1) as a generator, so that the motor (5) generates (M3) an activation voltage;
the switch (4) is activated (M4) by the gear mechanism (2) as a result of the movement of the actuating element (20) in the second direction (X2);
the brake circuit (5) is activated (M5) when the brake circuit (5) is supplied with the activation voltage and the switch (4) is activated; and
the brake circuit (6) brakes the motor (1), so that the motor (1) generates a force which counteracts the restoring force and slows down the movement of the actuating element (20) in the second direction (X2).

## Revendications

1. Ensemble d'entraînement (100) pour un actionneur de frein électromécanique (300), présentant :
un moteur électrique (1) ;
une transmission (2) couplée cinématiquement au moteur (1) avec un élément d'actionnement (20) pouvant être couplé à un dispositif de génération de pression (200) et pouvant être réglé linéairement par le moteur (1) dans une première direction (X1) à l'encontre d'une force de rappel pour actionner le dispositif de génération de pression (200) ;
un dispositif de commande (3) relié électriquement au moteur (1) pour commander le moteur (1) ;
**caractérisé par** un commutateur (4) qui peut être activé par la transmission (2) en conséquence d'un mouvement de l'élément d'actionnement (20) dans une deuxième direction (X2) ; et
un circuit de freinage électrique (5), qui est relié électriquement au moteur (1) et au commutateur (4) et qui peut être activé par une activation du commutateur (4) et une tension d'activation électrique, la tension d'activation étant générée par le moteur (1), si, en cas de défaillance du dispositif de commande (3), celui-ci agit comme générateur par absorption de la force de rappel agissant sur l'élément d'actionnement (20), le circuit de freinage (5) étant conçu pour freiner le moteur (1) afin de générer une force s'opposant à la force de rappel au moyen du moteur (1).

2. Ensemble d'entraînement (100) selon la revendication 1, dans lequel le circuit de freinage (5) est en outre conçu pour détecter une défaillance du dispositif de commande (3), en particulier sur la base d'un signal de défaillance émis par le dispositif de commande (3), et n'est activé que lorsqu'une défaillance du dispositif de commande (3) est détectée.

3. Ensemble d'entraînement (100) selon la revendication 1 ou 2, dans lequel l'élément d'actionnement (20) est mobile entre une position initiale et une position finale d'actionnement, dans lequel la force de rappel précontraint l'élément d'actionnement (20) dans la direction de la position initiale, et dans lequel le commutateur (4) est agencé de telle sorte que celui-ci est activé dans une position d'actionnement de l'élément d'actionnement (20), dans laquelle l'élément d'actionnement (20) se trouve plus près de sa position initiale que de sa position finale d'actionnement.

4. Ensemble d'entraînement (100) selon la revendication 3, dans lequel la position initiale et la position finale d'actionnement définissent une course maximale (h20) de l'élément d'actionnement (20), et dans lequel la position d'activation est éloignée de la position initiale d'une distance (s20) qui est dans une plage comprise entre 5 pour cent et 40 pour cent de la course maximale (h20).

5. Ensemble d'entraînement (100) selon l'une quelconque des revendications précédentes, dans lequel le commutateur (4) est réalisé sous la forme d'un commutateur de proximité, en particulier sous la forme d'un commutateur à lames souples ou d'un commutateur à effet Hall, ou sous la forme d'un commutateur à déclenchement mécanique.

6. Ensemble d'entraînement (100) selon l'une quelconque des revendications précédentes, dans lequel l'élément d'actionnement (20) est formé par une broche filetée qui est guidée linéairement par une partie de guidage (21) reliée de manière solidaire en rotation à celle-ci et réglable linéairement par un écrou d'entraînement (22) pouvant être mis en rotation par le moteur (1), le commutateur (4) pouvant être déclenché par la partie de guidage (21).

7. Ensemble d'entraînement (100) selon l'une quelconque des revendications précédentes, dans lequel le moteur (1) est réalisé sous la forme d'un moteur à courant continu sans balai avec un rotor (11) excité en permanence, un stator (12) qui présente au moins trois agencements de bobines (121, 122, 123) et un circuit de commutation (13) relié aux agencements de bobines (121, 122, 123), qui peut être actionné par le dispositif de commande (3). et dans lequel le circuit de freinage (5) est conçu pour court-circuiter au moins deux agencements de bobines (121, 122, 123) de sorte que ceux-ci agissent comme un frein à courants de Foucault.

8. Actionneur de frein électromécanique (300), présentant :
un ensemble d'entraînement (100) selon l'une quelconque des revendications précédentes ; et
un dispositif de génération de pression (200) couplé à l'élément d'actionnement (20) de la transmission (2) et présentant un raccord hydraulique (202) destiné à fournir un fluide hydraulique à un frein de roue.

9. Actionneur de frein (300) selon la revendication 8, dans lequel le dispositif de génération de pression (200) comporte un cylindre (210) et un piston (212) qui est logé dans le cylindre (210) et qui est mobile par l'élément d'actionnement (20) dans une direction avant (Y1) et une direction arrière (Y2) pour déplacer le fluide hydraulique, dans lequel le raccord hydraulique (202) est formé par un alésage de raccord (211) dans le cylindre (210), et dans lequel le cylindre (210) présente un alésage de mise à l'air (213) qui est libéré par le piston (212) lorsque celui-ci est déplacé dans la direction arrière (Y2) afin de relier le cylindre (210) à un réservoir (220).

10. Procédé (M) pour faire fonctionner un actionneur de frein électromécanique (300) selon la revendication 8 ou 9, comprenant :
la commande (M1) du moteur (1) par le dispositif de commande (3) de telle sorte que le moteur (1) déplace l'élément d'actionnement (20) dans la première ou la deuxième direction (X1, X2) pour augmenter ou diminuer une pression hydraulique au moyen du dispositif de génération de pression (200) ;
dans lequel, en cas de défaillance du dispositif de commande (3) :
une force de rappel agissant en conséquence de la pression hydraulique accumulée déplace (M2) l'élément d'actionnement (20) dans la deuxième direction (X2),
l'élément d'actionnement (20) se déplaçant dans la deuxième direction (X2) entraîne le moteur (1) en tant que générateur de sorte que le moteur (5) génère une tension d'activation (M3) ;
le commutateur (4) est activé (M4) par la transmission (2) en conséquence du mouvement de l'élément d'actionnement (20) dans la deuxième direction (X2) ;
le circuit de freinage (5) est activé (M5) lorsque le circuit de freinage (5) est alimenté par la tension d'activation et que le commutateur (4) est activé ; et
le circuit de freinage (6) freine le moteur (1), de sorte que le moteur (1) génère une force qui s'oppose à la force de rappel et ralentit le mouvement de l'élément d'actionnement (20) dans la deuxième direction (X2).
